# EUROPÄISCHE PATENTSCHRIFT

(11) **EP 0 706 680 B1**
(45) Veröffentlichungstag und Bekanntmachung des Hinweises auf die Patenterteilung: **12.03.1997**
(21) Anmeldenummer: 94918727.2
(22) Anmeldetag: 20.06.1994
(51) Int. Cl.: G05B 13/02, G05B 7/02

(54) **REGELEINRICHTUNG, INSBESONDERE FÜR EINEN NICHTLINEAREN, ZEITVARIANTEN PROZESS**
CONTROL DEVICE, ESPECIALLY FOR A NON-LINEAR PROCESS VARYING IN TIME
SYSTEME REGULATEUR, EN PARTICULIER POUR UN PROCESSUS NON LINEAIRE VARIABLE DANS LE TEMPS

(30) Priorität: 29.06.1993 DE 4321604
(43) Veröffentlichungstag der Anmeldung: 17.04.1996
(73) Patentinhaber: SIEMENS AKTIENGESELLSCHAFT, 80333 München (DE)
(72) Erfinder: LINZENKIRCHNER, Edmund, D-76344 Eggenstein-Leopoldshafen (DE)
(86) Internationale Anmeldenummer: DE9400699
(87) Internationale Veröffentlichungsnummer: WO9501589

(56) Entgegenhaltungen:
- US-A- 3 882 368
- US-A- 4 509 000
- US-A- 5 184 122
- AUTOMATISIERUNGSTECHNISCHE PRAXIS, Bd.34, Nr.8, August 1992, KARLSRUHE,BRD Seiten 451 - 460 H.PREUSS ET AL 'FUZZY CONTROLWERKZEUGUNTERSTUTZTE FUNKTIONSBAUSTEIN-REALISIERUNG FUER AUTOMATISIERUNGSGERAETE UND PROZESSLEITSYSTEME' in der Anmeldung erwähnt
- 1992 IEEE INTERNATIONAL CONFERENCE ON SYSTEMS MAN AND CYBERNETICS, Bd.2, 18. Oktober 1992, CHICAGO,USA Seiten 1603 - 1608 J.ZHENG ET AL 'STFC-SELF TUNING FUZZY CONTROLLER'

## Beschreibung

Die Erfindung betrifft eine Regeleinrichtung, insbesondere für einen nichtlinearen, zeitvarianten Prozeß, gemäß dem Oberbegriff des Anspruchs 1.

Werden konventionelle Regler, z. B. lineare PID-Regler, zur Regelung von realen Prozessen eingesetzt, dann können verschiedene Probleme auftreten. Insbesondere bei nichtlinearen Prozessen sind die Parameter eines linearen Reglers nur für einen Arbeitspunkt des Prozesses optimal. Bei diskontinuierlichen Prozessen treten beim An- und Abfahren des Prozesses veränderliche Arbeitspunkte auf. Die Folge kann ein ungenügendes Regelungsverhalten mit einem linearen Regler sein. Für lineare Regler sind ebenso zeitvariante Prozesse problematisch, deren Verhalten durch Einflüsse, wie z. B. schwankende Rohstoffqualitäten, veränderlich ist. Zudem bestehen bei vielen Prozessen Wechselwirkungen zwischen einzelnen Prozeßgrößen. Bei einer konventionellen Regelung wird der Prozeß im allgemeinen dennoch mit Eingrößenreglern ausgerüstet. Durch dieses Vorgehen entsteht unter Vernachlässigung der Wechselwirkungen eine Vielzahl von einschleifigen Regelkreisen für jeweils einzelne Prozeßgrößen. In bestimmten Prozeßzuständen kann hierdurch die Regelung ein unbefriedigendes Verhalten bekommen oder es treten sogar Instabilitäten auf. Zur Lösung dieser Probleme sind sogenannte höhere Regelungsverfahren, z. B. mit adaptiven Reglern, Zustandsreglern oder modellgestützten Reglern, bekannt. Diese werden aber in der Praxis nur selten eingesetzt, weil ihre Anwendung umfangreiche theoretische Kenntnisse sowie die mathematische Modellierbarkeit des Prozesses voraussetzen. Der dabei entstehende Aufwand ist oftmals sehr hoch; zum Teil ist es auch unmöglich, einen Prozeß mathematisch zu beschreiben. In der Praxis muß daher häufig ein Anlagenfahrer in den Prozeß eingreifen, der aufgrund seiner Erfahrung Prozeßzustände erkennen kann, in denen das gewünschte Prozeßverhalten durch die konventionelle Regelung nicht sichergestellt ist. Nachteilig dabei ist, daß durch unterschiedlich erfahrene Anlagenfahrer oder schon durch die veränderliche Tagesform eines Anlagenfahrers eine nicht reproduzierbare Prozeßführung entsteht.

Aus dem Aufsatz "Fuzzy Control - werkzeugunterstützte Funktionsbaustein-Realisierung für Automatisierungsgeräte und Prozeßleitsysteme" von Dr. Hans-Peter Preuß, Edmund Linzenkirchner und Steffen Alender, veröffentlicht in "atp" 34 (1992) Heft 8, Seiten 451 bis 460, ist bekannt, zur Vermeidung dieser Probleme den konventionellen Regler um einen zweiten Regler zu ergänzen. Der Ausgang des zweiten Reglers dient dort zur Stellgrößenkorrektur, um den konventionellen Regler bedarfsweise zu unterstützen. Zusätzlich werden mit einem weiteren Regler die Parameter Kp und Tv des konventionellen PID-Reglers an die veränderliche Prozeßdynamik angepaßt. Beim Zuschalten dieser Zusatzregler entstehen in nachteiliger Weise Stellgrößensprünge, die zu Stoßbelastungen der Stellglieder und damit zu deren schneller Alterung führen können.

Der Erfindung liegt die Aufgabe zugrunde, eine Regeleinrichtung, insbesondere für einen nichtlinearen, zeitvarianten Prozeß, mit mehreren Reglern zu schaffen, bei der Stoßbelastungen der Stellglieder durch Stellgrößensprünge vermieden werden.

Zur Lösung dieser Aufgabe weist die neue Regeleinrichtung der eingangs genannten Art die im kennzeichnenden Teil des Anspruchs 1 genannten Merkmale auf. In den Unteransprüchen 2 bis 5 sind vorteilhafte Weiterbildungen der Erfindung angegeben.

Die Erfindung hat den Vorteil, daß mit vergleichsweise geringem Aufwand eine reproduzierbare, vollautomatische Prozeßführung erzielt werden kann, bei der manuelle Eingriffe eines Anlagenfahrers nicht mehr notwendig sind. Durch die Verwendung eines Fuzzy-Reglers als Zusatzregler kann auf die Erstellung exakter mathematischer Modelle bei problematischen nichtlinearen oder zeitvarianten Prozessen, welche sich häufig sehr aufwendig gestalten würde, verzichtet werden. Besonders vorteilhaft wirkt sich die Erfindung bei diskontinuierlichen Prozessen aus, da in der Nähe eines quasi-stationären Arbeitspunktes die Vorteile konventioneller Regler und beim An- und Abfahren des Prozesses die Vorteile nichtlinearer Regler genutzt werden können. Erfindungsgemäß wird ein stoßfreies Umschalten der Regeleinrichtung erreicht.

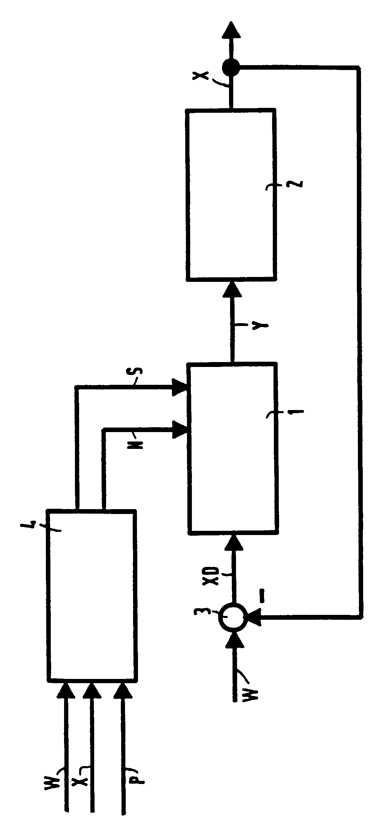

Anhand der Figur, die ein Blockschaltbild eines Regelkreises mit einer erfindungsgemäßen Regeleinrichtung zeigt, werden im folgenden die Erfindung sowie Ausgestaltungen und Vorteile näher erläutert.

Mit einem konventionellen Regler 1 wird eine Stellgröße y für einen Prozeß 2 gebildet. An dem Prozeß 2 wird mit einem geeigneten Meßumformer eine Regelgröße x erfaßt, welche in einem Vergleicher 3 von einer Führungsgröße w zur Bildung einer Regelabweichung xD subtrahiert wird. Diese Regelabweichung xD wird wiederum dem Regler 1 zugeführt und damit der Regelkreis geschlossen. Der Regler 1 ist auf zwei Arten betreibbar: In der Betriebsart "Regeln", in der die Stellgröße y allein durch die Funktion des Reglers 1 in Abhängigkeit von der Regeldifferenz xD bestimmt wird, und in der Betriebsart "Nachführen", in der die Stellgröße y durch eine an einen Nachführeingang anliegende Größe N vorgegeben wird. Zur Betriebsartenumschaltung dient ein Schaltsignal S, das an einem Schalteingang des Reglers 1 anliegt. Die beiden Signale N und S werden durch einen Fuzzy-Regler 4 aus der Führungsgröße w, der Regelgröße x und weiteren Prozeßgrößen p gebildet. Während der Regler 1 in einem engen Bereich um einen stationären Arbeitspunkt wirksam ist, werden mit dem Fuzzy-Regler 4 empirische Strategien von Anlagenfahrern beim An- und Abfahren des Prozesses 2 realisiert. Dadurch wird eine vollautomatische, reproduzierbare Prozeßführung erreicht.

Der Entwurf eines Fuzzy-Reglers kann grob in drei Schritte unterteilt werden: Definition der Ein-/Ausgangsgrößen, Definition von linguistischen Werten für die Ein-/Ausgangsgrößen durch Festlegung von Zugehörigkeitsfunktionen und Definition von Regeln unter Verwendung der linguistischen Werte zur Realisierung der gewünschten Strategie. Um die empirischen Strategien von Anlagenfahrern in dem Fuzzy-Regler 4 verwirklichen zu können, müssen daher zunächst die Prozeßgrößen ermittelt werden, durch deren Bewertung die Prozeßzustände erkannt werden können, bei denen Handeingriffe erforderlich sind. Diese stellen die Eingangsgrößen für den Fuzzy-Regler 4 dar. Sind für die Beurteilung des Prozeßzustands Größen relevant, die durch Berechnungen (z. B. Differentiation, mathematische Verknüpfung mehrerer Prozeßgrößen, Filterung) gebildet werden können, dann werden diese Berechnungen als konventionelle Vorverarbeitung realisiert und die Ergebnisse dem Fuzzy-Regler als Eingangsgrößen zugeführt. Die Größen für den Eingriff in den Prozeß 2 sind gegeben durch die Regler, an denen die Handeingriffe erfolgen. Diese Größen sind die Ausgangsgrößen des Fuzzy-Reglers 4. Danach werden die Wertebereiche für alle Ein-/Ausgangsgrößen des Fuzzy-Reglers 4 ermittelt, welche die Erkennung der Prozeßzustände ermöglichen, bei denen Handeingriffe erfolgen bzw. in welche der Stellgrößenbereich entsprechend den bisher erfolgten Handeingriffen unterteilt werden kann.

Diesen Wertebereichen werden linguistische Begriffe, z. B. "klein", "mittel" oder "groß", zugeordnet. Die bisher ausgeführten empirischen Strategien werden dann unter Verwendung der oben definierten Ein-/Ausgangsgrößen und Wertebereiche in der Form von Regeln beschrieben, die jeweils aus einem Bedingungsteil, in dem linguistische Begriffe für Wertebereiche von Eingangsgrößen des Fuzzy-Reglers 4 durch eine UND- oder eine ODER-Operation miteinander verknüpft werden, und aus einem Schlußfolgerungsteil, in dem der gewünschte Eingriff in den Prozeß 2 ebenfalls unter Verwendung von linguistischen Bezeichnungen von Wertebereichen der Ausgangsgrößen beschrieben wird, bestehen. Diese Wertebereiche werden als unscharfe Mengen in der Form von Zugehörigkeitsfunktionen zur Fuzzifizierung der Eingangsgrößen bzw. zur Defuzzifizierung der Ausgangsgrößen implementiert. Einen Sonderfall stellt das Umschaltsignal S zur Umschaltung der Betriebsarten des Reglers 1 dar, dessen Wertebereiche scharfen Mengen entsprechen. Die ermittelte empirische Strategie wird in der Form von Fuzzy-Regeln in einem Regelwerk implementiert.

Zur Gewährleistung einer stoßfreien Umschaltung von Fuzzy-Regelung auf konventionelle Regelung übernimmt der konventionelle Regler 1 unmittelbar nach der Umschaltung die zuletzt vom Fuzzy-Regler 4 vorgegebene Größe N am Nachführeingang als Stellgröße y. Bei einem PID-Regler kann dies dadurch erreicht werden, daß der Integralanteil des Reglers, korrigiert um den Proportional- und Differentialanteil entsprechend dem Verlauf von xD, an die Größe N angepaßt wird. Die Übergabe von konventioneller Regelung zur Fuzzy-Regelung wird im Fuzzy-Regler 4 durch die Zugehörigkeitsfunktionen festgelegt. Eine stoßfreie Umschaltung kann hier durch Optimierung der Zugehörigkeitsfunktionen im Übergabebereich bewirkt werden.

## Patentansprüche

1. Regeleinrichtung, insbesondere für einen nichtlinearen, zeitvarianten Prozeß (2),
- mit einem ersten Regler (1), insbesondere einem linearen PID-Regler, durch den aus einem Vergleich zwischen Führungsgröße (w) und Regelgröße (x) eine Stellgröße (y) ermittelbar ist, und
- mit einem zweiten Regler (4),
**dadurch gekennzeichnet,**
- daß der erste Regler (1) über einen Schalteingang zwischen den Betriebsarten "Nachführen" und "Regeln" umschaltbar ist, wobei in der Betriebsart "Nachführen" die Stellgröße (y) durch eine an einen Nachführeingang anlegbare Größe (N) vorgebbar ist und wobei die Stellgröße (y) bei Umschalten auf die Betriebsart "Regeln" den Parametern des ersten Reglers (1) entsprechend derart eingestellt wird, daß kein Stellgrößensprung auftritt,
- daß ein Ausgang des zweiten Reglers (4) auf den Nachführeingang des ersten Reglers (1) geführt ist und
- daß eine Einrichtung zur Erzeugung eines Signals (S) bei bestimmten Prozeßzuständen vorhanden ist, welches auf den Schalteingang des ersten Reglers (1) geführt ist und seine Betriebsart bestimmt.

2. Regeleinrichtung nach Anspruch 1, **dadurch gekennzeichnet,**
- daß bei einem diskontinuierlichen Prozeß das Signal (S) derart erzeugt wird, daß der erste Regler (1) in der Nähe eines quasi-stationären Arbeitspunktes in der Betriebsart "Regeln" und beim An- und Abfahren des Prozesses in der Betriebsart "Nachführen" betrieben wird.

3. Regeleinrichtung nach Anspruch 2, **dadurch gekennzeichnet,**
- daß der zweite Regler (4) ein Fuzzy-Regler ist.

4. Regeleinrichtung nach Anspruch 3, **dadurch gekennzeichnet,**
- daß das auf den Schalteingang geführte Signal (S) durch den Fuzzy-Regler (4) erzeugt wird.

5. Regeleinrichtung nach Anspruch 4, **dadurch gekennzeichnet,**
- daß neben Führungsgröße (w) und Regelgröße (x) noch weitere Prozeßgrößen (p) auf den Fuzzy-Regler (4) geführt sind.

## Claims

1. Controlling system, in particular for a nonlinear, time-variant process (2),
- having a first controller (1), in particular a linear PID controller, by means of which a manipulated variable (y) can be determined from a comparison between reference variable (w) and controlled variable (x); and
- having a second controller (4), characterised in that
- the first controller (1) can be switched over, by way of a switching input, between the operating modes "tracking" and "control", wherein in the operating mode "tracking" the manipulated variable (y) can be predetermined by a variable (N) which can be applied to a tracking input, and wherein when switching over to the operating mode "control", the manipulated variable (y) is adjusted according to the parameters of the first controller (1) in such a way that no jumps in the manipulated variables occur; in that
- an output of the second controller (4) is routed to the tracking input of the first controller (1); and in that
- a device is provided for producing a signal (S) during certain process states, which signal is supplied to the switching input of the first controller (1) and determines the operating mode thereof.

2. Controlling system according to claim 1, characterised in that in the case of a discontinuous process, the signal (S) is produced in such a way that in the vicinity of a quasi-stationary operating point the first controller (1) is operated in the operating mode "control", and when starting up and shutting down the process, said first controller is operated in the operating mode "tracking".

3. Controlling system according to claim 2, characterised in that the second controller (4) is a fuzzy controller.

4. Controlling system according to claim 3, characterised in that the signal (S) which is supplied to the switching input is produced by the fuzzy controller (4).

5. Controlling system according to claim 4, characterised in that alongside reference variable (w) and controlled variable (x), further process variables (p) are supplied to the fuzzy controller (4).

## Revendications

1. Dispositif de régulation, notamment d'un processus (2) non linéaire variable dans le temps,
- comportant un premier régulateur (1), notamment un régulateur PID linéaire, par lequel, à partir d'une comparaison entre grandeur (w) de référence et grandeur (x) réglée, une grandeur (y) réglante peut être déterminée, et
- comportant un deuxième régulateur (4),
caractérisé en ce que
- le premier régulateur (1) peut être commuté, par l'intermédiaire d'une entrée de commutation, entre deux modes de fonctionnement "asservir" et "régler", la grandeur (y) réglante pouvant, en le mode de fonctionnement "asservir", être prescrite par une grandeur (N) pouvant s'appliquer à une entrée d'asservissement, et la grandeur (y) réglante étant, lors de la commutation au mode de fonctionnement "régler", réglée en fonction des paramètres du premier régulateur (1), de manière qu'il ne se produise pas de saut de grandeur réglante,
- une sortie du deuxième régulateur (4) va à l'entrée d'asservissement du premier régulateur (1) et
- un dispositif de production d'un signal (S), qui va à l'entrée de commutation du premier régulateur (1) et qui détermine son mode de fonctionnement, étant présent pour des états déterminés du processus.

2. Dispositif de régulation suivant la revendication 1, caractérisé en ce que,
- pour un processus discontinu, le signal (S) est produit de manière à faire fonctionner le premier régulateur (1) en le mode de fonctionnement "régler" à proximité d'un point de fonctionnement quasi-stationnaire, et, au commencement et à l'arrêt du processus, en le mode de fonctionnement "asservir".

3. Dispositif de régulation suivant la revendication 2, caractérisé en ce que
- le deuxième régulateur (4) est un régulateur flou.

4. Dispositif de régulation suivant la revendication 3, caractérisé en ce que
- le signal (S) qui va à l'entrée de commutation est produit par le régulateur (4) flou.

5. Dispositif de régulation suivant la revendication 4, caractérisé en ce que
- en plus de la grandeur (w) de référence et de la grandeur (x) réglée, encore d'autres grandeurs (p) de processus vont au régulateur (4) flou.
